# EUROPEAN PATENT SPECIFICATION

(11) **EP 2 042 025 B1**
(45) Date of publication and mention of the grant of the patent: **06.04.2011**
(21) Application number: 08165366.9
(22) Date of filing: 29.09.2008
(51) Int. Cl.: A01D 75/30, A01D 57/20

(54) **A mower with a lateral conveyor**
Mäher mit seitlichem Förderband
Tondeuse avec transport latéral

(30) Priority: 28.09.2007 DK 200701400
(43) Date of publication of application: 01.04.2009
(73) Proprietor: JF-Fabriken - J. Freudendahl A/S, 6400 Sønderborg (DK)
(72) Inventor: Stamp, Brian, DK-6400, SØNDERBORG (DK); Freudendahl, Jørn, DK-6400, SØNDERBORG (DK)
(74) Representative: Joergensen, Bjoern Barker

(56) References cited:
- EP-A- 1 554 921
- EP-A- 1 616 474
- DE-A1- 19 645 629
- US-A1- 2001 045 087
- US-A1- 2002 152 735

## Description

The present invention relates to a mower comprising two elongated mowing aggregates, each at one end being hinged to a tractor frame, which can be connected to a tractor, for swinging in a horizontal plane between a working position in which the mowing aggregates project laterally relative to a vertical centre plane extending in a running direction, and a transport position in which the mowing aggregates project rearwards relative to the running direction, each mowing aggregate comprising a frame and each having a front and a rear relative to the running direction in the working position, at least one of the mowing aggregates having a lateral conveyor for conveying mowed crop laterally, which lateral conveyor is located behind the mowing aggregate in a working position, and which lateral conveyor comprises a conveyor aggregate with a front edge and a rear edge and at least one carrier arm which is connected to the conveyor aggregate at its rear edge and which is hinged by a hinge connection to the frame of the mowing aggregate for swinging of the lateral conveyor between an active working position and a passive transport position.

A mower of the above type is known from EP-A-1 616 474, which describes a towed mower with a running frame provided with wheels and at its front end carrying two mowing aggregates which can be swung horizontally between a working position in which they extend laterally to respective sides, and a transport position in which they extend rearwards. It is proposed that the mowing aggregates have conveyors located behind them for conveying mowed crop laterally. In the transport position, these conveyors are lifted to a passive position not explained in further detail so as not to take up space between the mowing aggregates, which have to be brought closely together in order not to take up more space in the width than permitted for driving on public roads. The conveyors are shown rigidly mounted in rigid arms hinged on the frame of the mowing aggregate, whereby the conveyor with arms, as a rigid unit, can be swung up to the passive position.

Similar mowers and conveyors are disclosed in various publications:
US 2001-045087 A1 discloses a mower with a conveyor, which is attached to the frame structure of the mower by arms, which are at one end hinged to the frame structure and at the other end to the conveyor.
DE-U-200 12 446 describes a mover in which two mowing aggregates are hinged at their one end to a frame suspended in the three-point suspension of a tractor, and at their other end have a running wheel which is turnable for repositioning during the repositioning of the mowing aggregates between laterally projecting working positions and rearwards projecting transport positions.

In addition, EP-A-0 439 991 describes a towed mower with a lateral conveyor corresponding to the one shown in the above publication EP-A-1 616 474, but the lateral conveyor according to EP-A-0 439 991 has rollers instead of a belt as described in EP-A-1 616 474.

US 2002/0152735 A describes a towed mower with a fixed swath collecting unit comprising a frame and a conveyor belt swingable in the frame between an active position and a passive position.

It is a continuous desire and an object to develop larger mowers to be able to mow a field as fast as possible. There are, however, limitations to the size of mowers as it has to be taken into consideration that it must be possible to transport them on public roads and they must be able to pass doors of engine houses for storage. With the solution according to EP-A-1 616 474, it may be difficult or impossible, particularly in case of large mowing aggregates, to bring the width of the mowing aggregates below the maximum legal transport width when they are in the transport position.

In the light of the above, the object of the invention is to provide a mower as described in the introduction, but which is smaller in the transport position.

In order to meet this object, the mower according to the invention is characterized in having a second hinge connection positioned between the conveyor aggregate and the end of the carrier arm which is connected to the frame of the mowing aggregate the carrier arm(s) of each lateral conveyor comprise(s) an inner member hinged to the frame of the mowing aggregate, and an outer member hinged to the inner member and to the conveyor aggregate. Two hinge connections are thus provided between the conveyor aggregate and the end of the carrier arm which is connected to the frame of the mowing aggregate, which increases the possibility of folding of the lateral conveyor in the transport position and makes the width of the lateral conveyor transversely to the transport direction even smaller, just as it is possible to reduce the height of the lateral conveyor in the transport position.

With the additional hinge connections it is possible according to the invention to obtain a further compression of the mowing aggregate including the lateral conveyor when it is in the transport position. The lateral conveyor will thus be divided into at least three foldable parts, whereby the lateral conveyor is compressed. This will make the total width of the mower in the transport position smaller. Therefore, greater freedom of design and size of the mower is provided, and it will be easier to transport and store it. The mower according to the invention is safer, as it does not project so far to each side, and it blocks less of the tractor driver's view.

In a preferred embodiment of the invention, the lateral conveyor comprises two carrier arms, which provides better balance and control.

In another preferred embodiment, at least one member of the carrier arm is a member of a four-member mechanism for controlling the position of the conveyor aggregate relative to the angular position of the said member of the carrier arm. In this connection it is particularly advantageous if the inner and the outer members are members of respective four-member mechanisms, whereby the position of the conveyor aggregate is determined relative to the position of the inner member. These features simplify movement of the carrier arm and make the movement of the arm more well-defined. Moreover, fewer drive means will be required to drive the individual members correctly relative to each other.

In another preferred embodiment, the lateral conveyor, in the transport position, is located in its entirety behind a vertical longitudinal centre plane of the mowing aggregate. This gives the tractor driver a better rearward view.

The invention will now be described in more detail below by means of an example of an embodiment and with reference to the schematic drawing, in which
Fig. 1 is a top view of an embodiment of a mower according to the invention in a working position,
Fig. 2 is a view corresponding to that of Fig. 1, in which the mower is in an intermediate position,
Fig. 3 is a view corresponding to that of Fig. 1, in which the mower is in a transport position,
Fig. 4 is a side view of the mower according to Fig. 1 in the transport position shown in Fig. 3,
Fig. 5 is a view seen from the end of a mowing aggregate with a side conveyor of the mower according to Fig. 1 in a working position corresponding to the working position of the mower of Fig. 1, and
Fig. 6 is a view corresponding to that of Fig. 5, in which the lateral conveyor is in a transport position corresponding to the intermediate position and the transport position of the mower as shown in Figs. 2 and 3, respectively.

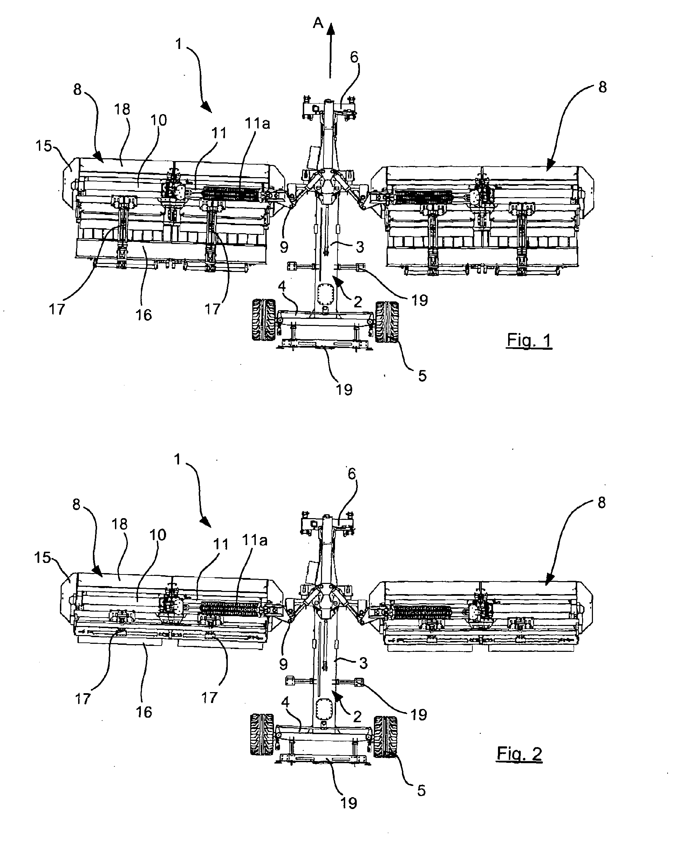

A mower 1 according to the invention and shown in Figs. 1 to 4 has a tractor frame in the form of a T-shaped running frame 2 with a leg 3 and a crossbeam 4 in the T. At the ends of the crossbeam 4 ground wheels 5 are provided, said wheels carrying the mower 1 at least partially. At the front end of the leg 3 a connection device 6 is provided for connecting the mower 1 with a tractor (not shown) for towing and possibly also for partially carrying the mower 1.

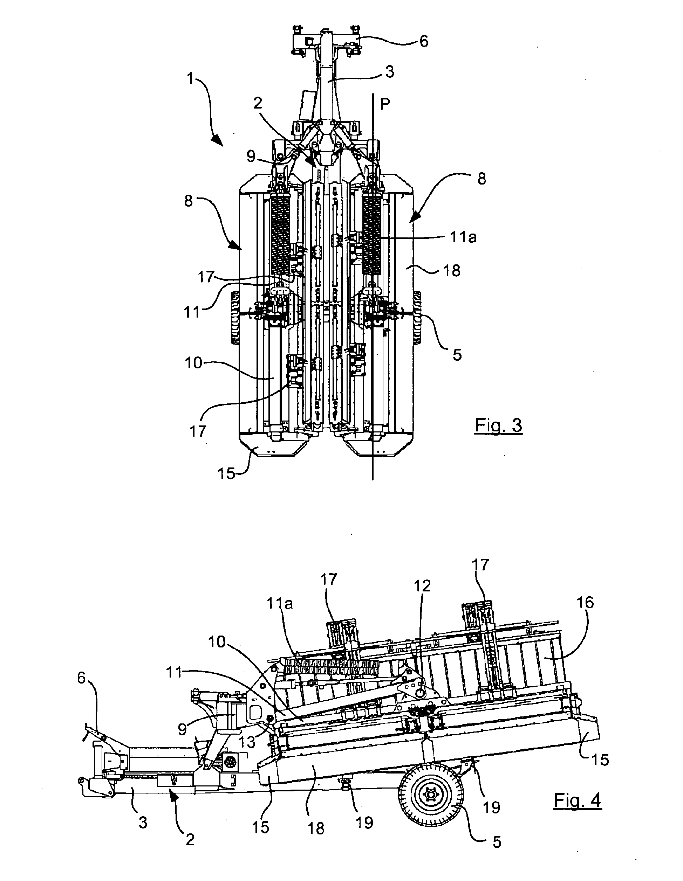

The mower 1 comprises two mowing aggregates 8, of which only the left one is shown in Fig. 4, while both are shown in Figs. 1 to 3. The mowing aggregates 8 are mounted on the running frame 2 substantially symmetrically about a vertical plane through the leg 3. Thus, each mowing aggregate 8 is mounted by a first hinge 9 with a substantially vertical axis about which the mowing aggregate 8 can swing in a horizontal plane between a working position (Fig. 1) or an intermediate position (Fig. 2) and a transport position (Figs. 3 and 4). In the working position and the intermediate position of the mower 1, each of the mowing aggregates 8 extends laterally from the running frame 2, and in the transport position each of the mowing aggregates 8 extends rearwards, as will be explained in detail below.

Each of the mowing aggregates 8 has a front and a rear relative to the running direction (arrow A) in the working position and comprises a frame structure 10 extending over the working width of the mowing aggregate 8. A beam 11 extends between a second hinge 12, which connects the beam 11 with the frame structure 10, and a third hinge 13 placed close to the first hinge 9, see Fig. 4 in particular. The second hinge 12 and the third hinge 13 each has a substantially horizontal hinge axis extending transversely to the beam 11. By swinging about the third hinge 13, the beam 11 can lift the mowing aggregate 8 from the ground. A power means, not shown, is provided, such as a hydraulic cylinder, to swing the beam 11 and lift the mowing aggregate 8. Furthermore, a spring 11a is provided to act on the beam 11 in order to relieve the pressure of the mowing aggregate 8 against the ground to a desired pressure. By swinging about the second hinge 12, the mowing aggregate 8 may adjust itself to the contour of the ground where it is uneven, in a manner known per se.

In addition to what has already been mentioned, the mowing aggregate 8 comprises cutting aggregates, not shown, in the form of a number of cutter discs mounted on a cutter bar extending in the working width transversely to the running direction A (Fig. 1). Under the cutter bar, slide shoes 14 are provided which slide across the ground during operation and carry the part of the weight of the mowing aggregate not carried by the running frame 2. A conditioning rotor, not shown, is preferably provided behind the mowing means. The rotor may be of the type which, at its ends, has screw portions which can convey material cut by the mowing means towards the centre portion of the conditioning rotor where crimping fingers are provided which crimp or condition the material and throw it to the rear.

In a manner known per se, the mowing aggregates comprise a safety screen with side portions 15 and a safety cloth 18.

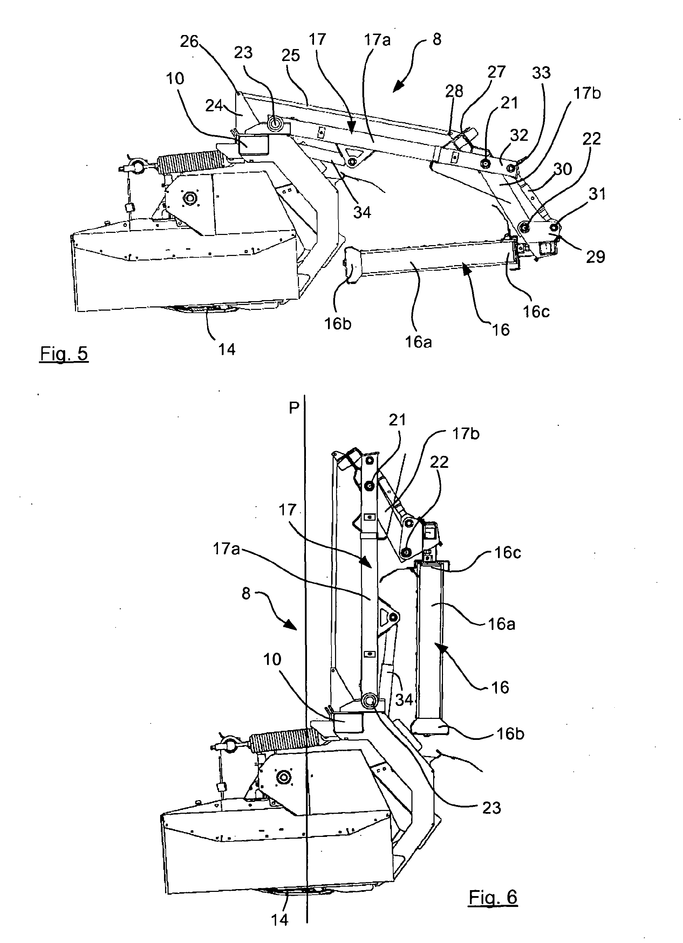

The mowing aggregate 8 is shown in further detail in Figs. 5 and 6 and is provided with a lateral conveyor 16 arranged behind the mowing aggregate 8 and hinged to the frame structure 10 by means of two carrier arms 17. Thereby, the lateral conveyor 16 may be swung between the working position shown in Figs. 1 and 5 and the transport position shown in Figs. 2 to 4 and 6. In Fig. 2, the mowing aggregate 8 with lateral conveyor is shown in an intermediate position in which the lateral conveyor 16 is in a transport position, but in which the actual mowing aggregate 8 has been swung out into a working position. In Figs. 3 and 4, the mowing aggregate 8 has been swung in so that it projects rearwards relative to the running direction and assumes its transport position resting on two abutments 19 on the running frame 2.

In its active working position, the lateral conveyor 16 may receive material thrown by the conditioning rotor and convey it laterally towards the centre line of the mower 1 (the leg 3). In addition to the carrier arms 17, the lateral conveyor 16 comprises a conveyor aggregate 16a, which has a conveyor belt, and which has a front edge 16b and a rear edge 16c. In other embodiments, the conveyor aggregate 16a may be provided with, for example, a screw or a number of parallel rollers, as is well known in the art.

Each carrier arm 17, of which only one is visible in Figs. 5 and 6, is hinged to the conveyor aggregate 16a at its rear edge 16c by means of a hinge connection 22 positioned between the conveyor aggregate 16 and the end of the carrier arm 17 which is connected to the frame structure 10. By a second hinge connection 21 positioned between the conveyor aggregate 16 and the end of the carrier arm 17 which is connected to the frame structure 10, the carrier arm 17 is divided into two members, viz. an inner member 17a and an outer member 17b. Furthermore, by means of a third hinge connection 23, the carrier arm is hinged to the frame structure 10. The hinge connections 21, 22, 23 render it possible to swing the lateral conveyor 16 between the active working position of Fig. 5 and the passive transport position of Fig. 6. Thus, the carrier arm 17 of each lateral conveyor 16 comprises an inner member 17a hinged to the frame structure 10 and an outer member 17b hinged to the inner member 17a and the conveyor aggregate 16a.

The inner and outer members are each members of respective four-member mechanisms whereby the position of the conveyor aggregate 16a is determined relative to the position of the inner member relative to the frame structure 10. Thereby, the movement of the carrier arm 17 is fully determined as the carrier arm 17 can thus only move in one well-defined path between the two positions. In addition to the inner member, the four-member mechanism of the inner member 17a comprises the frame structure 10 comprising a bracket 24, a parallel rod 25 which is connected to the bracket 24 by a hinge 26, and an extension 27 of the outer member 17b, which extension is connected to the parallel rod 25 by a hinge 28. In addition to the outer member, the four-member mechanism of the outer member 17b comprises the conveyor aggregate 16a comprising a second bracket 29, a parallel arm 30 which is connected to the second bracket 29 by a hinge 31, and an extension 32 of the inner member 17a which is connected to the parallel arm 30 by a hinge 33. The four-member mechanisms also have the effect that the total height of the mowing aggregate 8 including the lateral conveyor in the transport position is further reduced as the outer member is folded downwards, compare Figs. 5 and 6. Furthermore, the total distance of the carrier arm 17 from the lateral conveyor 16 in the transport position is considerably reduced compared with a mowing aggregate without hinge connections 21 and 22.

In an embodiment of the invention not shown, the carrier arm 17 only comprises a single hinge connection, for example, corresponding to the hinge connection 22. Such an embodiment provides similar advantages, although to a lesser degree than for the embodiment shown in the drawing.

In the embodiment shown in the drawing, a hydraulic cylinder 34 moves the carrier arm 17 and the lateral conveyor 16 between the transport position and the working position. This makes it possible in a simple and reliable way to provide the movement between the two positions of the lateral conveyor 16. Due to the four-member mechanisms 17a, 17b of the carrier arm 17, only a single hydraulic cylinder 34 is necessary to move the carrier arm 17 and the lateral conveyor 16 between the passive and the active positions.

On its front, the mowing aggregate 8 is provided, in a manner known per se, with the safety cloth 18, which is carried by a frame that can be folded up.

During operation, the mowing aggregates 8 are carried laterally extended in the working position to mow respective paths adjacent to or overlapping the path mowed by a third mower (not shown) arranged on the front end of the tractor, not shown. The mowing aggregates 8 may each have a working width of, for example, 5 m or more, and in order not to exceed the maximum width for transport on public roads the front third mower may have a working width of 3 m. In many countries, 3 m is the largest permissible width of a vehicle for driving on public roads.

For transportation, the mowing aggregates 8 are lifted by means of the beams 11 and are swung rearwards about the hinges 9 to positions above the abutment 19, whereupon they are lowered to rest thereon. The conveyors 16 are swung to their passive position. The safety cloths 18 are folded up with their frames so as not to project laterally in the transport position. In this way, the transport width of the towed mower 1 is reduced to a permissible size for driving on public roads. This is obtained concurrently with a very comprehensive working width.

As shown in Fig. 6, the lateral conveyor 16, in the transport position, is located in its entirety behind a vertical centre plane P of the mowing aggregate 8. The vertical centre plane P is the plane right between the outer edges of the mowing aggregate 8 when the mowing aggregate 8 is viewed from the side as in Fig. 6. In the present embodiment, these outer edges are defined by the frame structure 10 and the conveyor 16. As best seen from Fig. 3, this provides the tractor driver with a good rearward view.

## Claims

1. A mower (1) comprising two elongated mowing aggregates (8), each at one end being hinged to a tractor frame (2), which can be connected to a tractor, for swinging in a horizontal plane between a working position in which the mowing aggregates (8) project laterally relative to a vertical centre plane extending in a running direction, and a transport position in which the mowing aggregates (8) project rearwards relative to the running direction, each mowing aggregate (8) comprising a frame structure (10) and each having a front and a rear relative to the running direction in the working position, at least one of the mowing aggregates (8) having a lateral conveyor (16) for conveying mowed crop laterally, which lateral conveyor (16) is located behind the mowing aggregate (8) in a working position, and which lateral conveyor (16) comprises a conveyor aggregate (16a) with a front edge (16b) and a rear edge (16c) and at least one carrier arm (17) which is connected to the conveyor aggregate (16a) at its rear edge (16c) and which is hinged by a hinge connection (23) to the frame structure (10) of the mowing aggregate (8) for swinging of the lateral conveyor (16) between an active working position and a passive transport position, **characterized in** having a second hinge connection (21, 22) positioned between the conveyor aggregate (16a) and the end of the carrier arm (17) which is connected to the frame structure (10) of the mowing aggregate (8), and **in that** the carrier arm(s) (17) of each lateral conveyor (16) comprise(s) an inner member hinged to the frame structure (10) of the mowing aggregate (8), and an outer member hinged to the inner member and to the conveyor aggregate (16a).

2. A mower (1) according to claim 1, **characterized in that** the lateral conveyor (16) comprises two carrier arms (17).

3. A mower (1) according to claim 1 or 2, **characterized in that** at least one member of the carrier arm (17) is a member of a four-member mechanism (17a; 17b) for controlling the position of the conveyor aggregate (16a) relative to the angular position of the said member of the carrier arm (17).

4. A mower (1) according to claim 3, **characterized in that** the inner and outer members are members of respective four-member mechanisms (17a; 17b), whereby the position of the conveyor aggregate (16a) is determined relative to the position of the inner member.

5. A mower (1) according to any one of claims 1 to 4, **characterized in that** the lateral conveyor (16), in the transport position, is located in its entirety behind a vertical longitudinal centre plane (P) of the mowing aggregate (8).

## Patentansprüche

1. Mäher (1) mit zwei länglichen Mähaggregaten (8), die jeweils an einem Ende mit einem Zugmaschinenrahmen (2), der mit einer Zugmaschine verbunden werden kann, derart gelenkig verbunden sind, dass sie in einer horizontalen Ebene zwischen einer Arbeitsposition, in der die Mähaggregate (8) relativ zu einer in Fahrtrichtung verlaufenden vertikalen Mittenebene lateral wegstehen, und einer Transportposition verschwenkbar sind, in der die Mähaggregate (8) relativ zu der Fahrtrichtung nach hinten wegstehen, wobei jedes Mähaggregat (8) eine Rahmenkonstruktion (10) besitzt sowie eine Vorderseite und eine Rückseite relativ zu der Fahrtrichtung in der Arbeitsposition aufweist, wobei mindestens eines der Mähaggregate (8) eine seitliche Fördereinrichtung (16) zum Fördern von Mähgut in seitlicher Richtung aufweist, wobei sich die seitliche Fördereinrichtung (16) in einer Arbeitsposition hinter dem Mähaggregat (8) befindet und wobei die seitliche Fördereinrichtung (16) ein Förderaggregat (16a) mit einem vorderen Rand (16b) und einem hinteren Rand (16c) sowie mindestens einen Trägerarm (17) aufweist, der mit dem Förderaggregat (16a) an dessen hinterem Rand (16c) verbunden ist und der durch eine Gelenkverbindung (23) mit der Rahmenkonstruktion (10) des Mähaggregats (8) gelenkig verbunden ist, um eine Schwenkbewegung der seitlichen Fördereinrichtung (16) zwischen einer aktiven Arbeitsposition und einer passiven Transportposition auszuführen,
**dadurch gekennzeichnet, dass** er eine zweite Gelenkverbindung (21, 22) aufweist, die zwischen dem Förderaggregat (16) und dem mit der Rahmenkonstruktion (10) des Mähaggregats (8) verbundenen Ende des Trägerarms (17) angeordnet ist, und dass der oder die Trägerarme (17) jeder lateralen Fördereinrichtung (16) ein mit der Rahmenkonstruktion (10) des Mähaggregats (8) gelenkig verbundenes inneres Element und ein mit dem inneren Element und dem Förderaggregat (16a) gelenkig verbundenes äußeres Element aufweisen.

2. Mäher (1) nach Anspruch 1,
**dadurch gekennzeichnet, dass** die seitliche Fördereinrichtung (16) zwei Trägerarme (17) aufweist.

3. Mäher (1) nach Anspruch 1 oder 2,
**dadurch gekennzeichnet, dass** es sich bei mindestens einem Element des Trägerarms (17) um ein Element eines aus vier Elementen bestehenden Mechanismus (17a; 17b) zum Steuern der Position des Förderaggregats (16a) relativ zu der Winkelposition des genannten Elements des Trägerarms (17) handelt.

4. Mäher (1) nach Anspruch 3,
**dadurch gekennzeichnet, dass** die inneren und äußeren Elemente Elemente von jeweiligen aus vier Elementen bestehenden Mechanismen (17a; 17b) sind, so dass die Position des Förderaggregats (16a) relativ zu der Position des inneren Elements festgelegt ist.

5. Mäher (1) nach einem der Ansprüche 1 bis 4,
**dadurch gekennzeichnet, dass** sich die seitliche Fördereinrichtung (16) in der Transportposition vollständig rückwärts von einer vertikalen Längsmittenebene (P) des Mähaggregats (8) befindet.

## Revendications

1. Faucheuse (1) comprenant deux groupes allongés de fauchage (8) dont chacun est articulé, par l'une des extrémités, sur un cadre d'attelage (2) pouvant être relié à un tracteur, en vue d'osciller dans un plan horizontal entre une position de travail, dans laquelle les groupes de fauchage (8) font saillie latéralement vis-à-vis d'un plan médian vertical s'étendant dans une direction de déplacement, et une position de transport dans laquelle lesdits groupes de fauchage (8) font saillie vers l'arrière par rapport à la direction de déplacement, chaque groupe de fauchage (8) offrant une structure de châssis (10) et chacun desdits groupes comprenant une partie avant et une partie arrière par rapport à la direction de déplacement, dans la position de travail, au moins l'un des groupes de fauchage (8) étant muni d'un convoyeur latéral (16) dévolu au convoyage latéral d'espèce fauchée, lequel convoyeur latéral (16) est situé derrière le groupe de fauchage (8) dans une position de travail, et lequel convoyeur latéral (16) comprend un groupe de convoyage (16a) pourvu d'un bord antérieur (16b) et d'un bord postérieur (16c), et au moins un bras de support (17) qui est relié audit groupe de convoyage (16a) sur son bord postérieur (16c) et est articulé sur la structure de châssis (10) du groupe de fauchage (8), par une liaison articulée (23), en vue d'une oscillation du convoyeur latéral (16) entre une position opérante de travail et une position inopérante de transport, **caractérisée par le fait qu'**elle présente une seconde liaison articulée (21, 22) interposée entre le groupe de convoyage (16a) et l'extrémité du bras de support (17) qui est reliée à la structure de châssis (10) du groupe de fauchage (8) ; et **par le fait que** le(s) bras de support (17) de chaque convoyeur latéral (16) comporte(nt) un élément intérieur, articulé sur ladite structure de châssis (10) dudit groupe de fauchage (8), et un élément extérieur articulé sur ledit élément intérieur et sur ledit groupe de convoyage (16a).

2. Faucheuse (1) selon la revendication 1, **caractérisée par le fait que** le convoyeur latéral (16) comprend deux bras de support (17).

3. Faucheuse (1) selon la revendication 1 ou 2, **caractérisée par le fait qu'**au moins l'un des éléments du bras de support (17) est un élément d'un mécanisme (17a ; 17b) comptant quatre éléments, pour commander la position du groupe de convoyage (16a) vis-à-vis de la position angulaire dudit élément du bras de support (17).

4. Faucheuse (1) selon la revendication 3, **caractérisée par le fait que** les éléments intérieur et extérieur sont des éléments de mécanismes respectifs (17a ; 17b) comptant quatre éléments, de sorte que la position du groupe de convoyage (16a) est déterminée par rapport à la position dudit élément intérieur.

5. Faucheuse (1) selon l'une quelconque des revendications 1 à 4, **caractérisée par le fait que**, dans la position de transport, le convoyeur latéral (16) est intégralement situé derrière un plan médian longitudinal vertical (P) du groupe de fauchage (8).
